# EUROPEAN PATENT APPLICATION

(11) **EP 3 944 797 A1**
(43) Date of publication of application: **02.02.2022**
(21) Application number: 21183180.5
(22) Date of filing: 01.07.2021
(51) Int. Cl.: A47J 43/07

(54) **VERTICAL LOCKING MECHANISM ON HOUSEHOLD APPLIANCES**

(30) Priority: 30.07.2020 DE 102020209668
(71) Applicant: BSH Hausgeräte GmbH, 81739 München (DE)
(72) Inventor: Kovacec, Bostjan, 1420 Trbovlje (SI); Pesec, Jurij, 3301 Petrovce (SI); Potocnik, David, 3214 Zrece (SI)

(57) **Abstract**

The present invention relates to a food processor with a motor block (1) and an appliance (3) being separable from the motor block (1) for what the motor block (1) has a connection section (2) and the appliance (3) has a connection region (4) corresponding with the connection section (2) and with locking pins (7) cooperating with locking slots (8) being situated at the connection section (2) or the connection region (4), respectively.

The known food processors of this kind have the motor block (1) and the appliance (3) connected by locking mechanisms in the form of bayonet systems. To facilitate the handling when locking or releasing the appliance (3) to the motor block (1) it is proposed to provide locking pins (7) that are retractable from said locking slots (8).

Accordingly the appliance (3) can be connected to or lifted from the motor block (1) without having to rotate it during this process. In a preferred embodiment the locking pins (7) are retracted by use of a pushbutton (10).

## Description

### AREA OF THE INVENTION

The present invention relates to a food processor with a motor block and an appliance being separable from the motor block for what the motor block has a connection section and the appliance has a connection region corresponding with the connection section and with locking pins cooperating with locking slots being situated at the connection section or the connection region, respectively.

### STATE OF THE ART

Food processors are generally known. They have a motor block to which an appliance, especially a bowl is connected. After connecting motor block and appliance this connection has to be locked. This locking is compulsory in order to prevent uncontrolled displacement of the appliance or bowl during the food processing. Especially in cases of kneading dough, what is very dynamic, such a locking is extremely necessary. The most common locking mechanisms work as a bayonet system. This means that the appliance or bowl has to be firstly vertically positioned on the motor block and has to be rotated afterwards to be locked.

This double movement is considered as being relative cumbersome.

### SUBJECT OF THE INVENTION

Therefore the inventors had the idea to facilitate the connecting of a motor block and a related appliance. So the subject of the present invention is to improve this connecting procedure of motor block and appliance.

### SUMMARY OF THE INVENTION

To achieve the subject of the present invention it is therefore proposed that the locking pins that are provided to cooperate with locking slots are designed to be retractable from said locking slots.

Retractable as understood in this application means that the pins are movable in a direction parallel to the longitudinal extension/central axis of the pins. Especially into the device at that the pins are provided.

The advantage of the present invention is that connecting the appliance and the motor block is facilitated as it is sufficient to have only the vertical movement of the appliance when fixing it on the motor block while the rotational movement as with the state of the art can be omitted.

Accordingly the connecting of appliance and motor block is quick and as now a second i.e. a turning movement is not necessary anymore a locked appliance is achieved more easily.

Furthermore a device according to the invention has the advantage of having surfaces with an improved smoothness. This results in an easier cleaning of the device.

### PREFERRED EMBODIMENTS OF THE INVENTION

Preferred embodiments with features that can be used either alone or in combination with each other are subject of the dependent claims. Any reference numbers in the claims are considered to be not restrictive but intended to improve the legibility of the claims.

A special embodiment of the invention provides that the locking pins are spring-loaded to engage with the locking slots. This has the advantage that the engagement of the locking pins within the locking slots creates a "click"-sound that gives a good feedback to the user. So the user is informed that the appliance is properly locked on the motor block.

To facilitate the vertical mounting of the appliance onto the motor block it is proposed that the locking pins are provided with wedge like front edges so that the locking pins can be pushed back easily by the vertical moving part when connecting motor block and appliance.

Furthermore it is proposed that the locking pins are retractable by a pushbutton. Such a pushbutton is a reliable feature and it is an easy to handle device to unlock the connection between motor block and appliance so that the appliance can be easily removed from the motor block after the pushbutton has been activated.

With a preferred embodiment the pushbutton cooperates with a movable appliance indicator so that the pushbutton is releasable after the appliance indicator has indicated the removal of the appliance from the motor block, using a magnet and a cooperating metal part that are provided at the pushbutton and at the appliance indicator, respectively.

This embodiment has the advantage that the pushbutton is hold by the magnetic force between the magnet and the metal part in its pushed in position during that the appliance can be removed from the motor block of the food processor. When removing the appliance the appliance indicator moves back into a position that indicates that no appliance is connected with the motor block. With this movement the magnet and the corresponding metal part are separated so that the pushbutton is not hold in its pushed in position by said magnetic force anymore so that it will return to its original position again.

Accordingly it is possible to simply press the pushbutton so that the locking mechanism is released for as long as the appliance is attached to the motor block. So a user then can easily handle the appliance with both hands by simply lifting it in order to take it off the motor block.

It is furthermore proposed that the locking pins are situated at the end of locking levers that cooperate with the pushbutton. Like this a operationally reliable construction is realised.

Furthermore the connection section of the motor block and the connection region of the appliance are rotational symmetric. This gives the advantage that a user can fit the appliance in different positions onto the motor block thus improving the handling of the food processor in different surroundings.

### SHORT DESCRIPTION OF THE DRAWINGS

Further features and advantages of the present invention can be learned from the following description of the figures that show preferred embodiments but shall not be understood as being limiting for the present application.
- Fig. 1: perspective view of a motor block;
- Fig. 2: an appliance in perspective view from below
- Fig. 3: view of a locking mechanism in exploded state;
- Fig. 4: sketch of a motor block with attached appliance in locked state;
- Fig. 5: sketch of a motor block with attached appliance in unlocked state;
- Fig. 6: section of an appliance locked onto a motor block.

### DETAILED DESCRIPTION OF THE DRAWINGS

In the following description of a preferred embodiment same reference numbers are used for same parts.

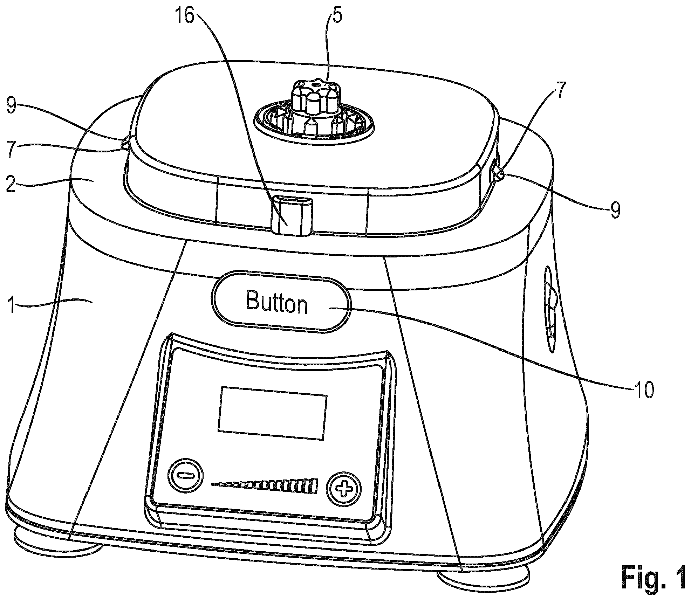

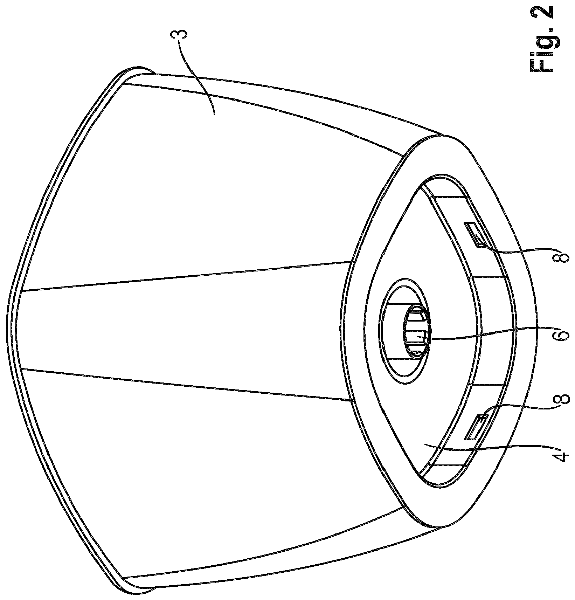

In figure 1 a motor block 1 of a food processor is shown. At its upper end this motor block has a recess at its circumference that forms a connection section 2 on this motor block 1. An appliance 3 can be positioned on this connection section 2. Such an appliance is shown in figure 2. such appliance can be a mixing bowl, a blender or the like.

The appliance is provided with a connection region 4 at its lower end. The form and the dimension of the connection section 2 and of the connection region 4 are about the same. This form is rotational symmetric, but not round. This means that the appliance 3 can be positioned in a number of different positions onto the motor block 1 but cannot be moved along the circumferential direction. In fact the appliance 3 can be moved only in vertical direction onto the motor block 1.

When the appliance 3 is positioned with its connection region 4 on the connection section 2 of the motor block 1 a shaft end 5 of the motor protruding about centrically from the top of the motor block 1 connects to a corresponding connector 6 that is positioned centrically on the bottom of the appliance 3. Attached to the connector 3 is a tool of the appliance, e.g. a chopper or a dough hook that is situated in the inner region of the appliance 3. the tool then can be rotated by the motor to process any food introduced into said inner region of the appliance 3.

To work the tool of the appliance results in vibrations of the appliance. To avoid that due to these vibrations the appliance 3 disengages from the motor block 1 there is provided a locking mechanism that comprises locking pins 7 on the connection section 2 of the motor block 1 and locking slots 8 on the connection region 4 of the appliance 3 that correspond with said locking pins 7.

With another example of the invention (not shown) it would as well be possible to have locking pins on the appliance and corresponding locking slots on the motor block.

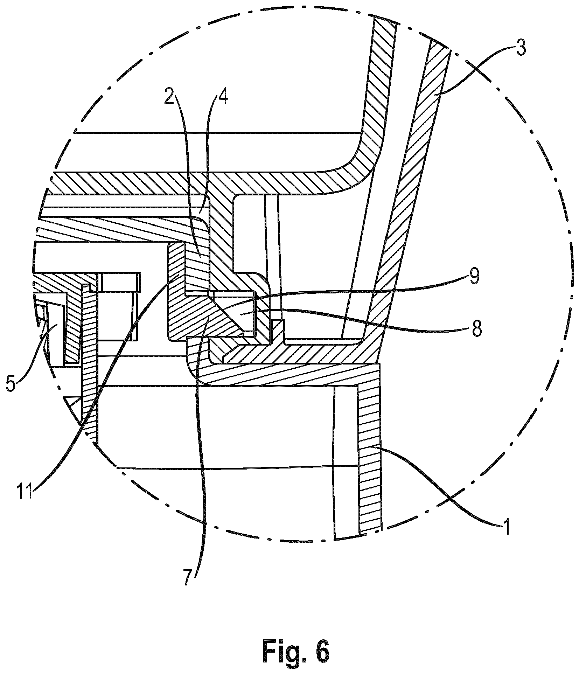

The locking pins 7 are provided with wedge like front edges 9 as can be seen in fig. 6. As the locking pins 7 are spring-loaded they thus will retract into the motor block 1 when the connection section 4 of the appliance 3 passes them during the vertical movement while putting the appliance 3 onto the motor block 1 and then will jump into the related locking slots 8 to engage with them. This movements of retraction and jumping forward again are oriented parallel to a central axis of the locking pins along their longitudinal extension.

The above mentioned movement of the locking pins 7 jumping into the related locking slots 8 is acompanied by a "click"-sound. This gives an acoustic feedback to the user of the food processor so that the user is aware that the appliance and the motor block are firmly connected.

Later when the appliance 3 is to be disengaged from the motor block 1 the locking pins 7 have to be retracted from the locking slots 8 so that the appliance 3 can be moved again in vertical direction. To effect this retraction of the locking pins 7 they cooperate with a pushbutton 10.

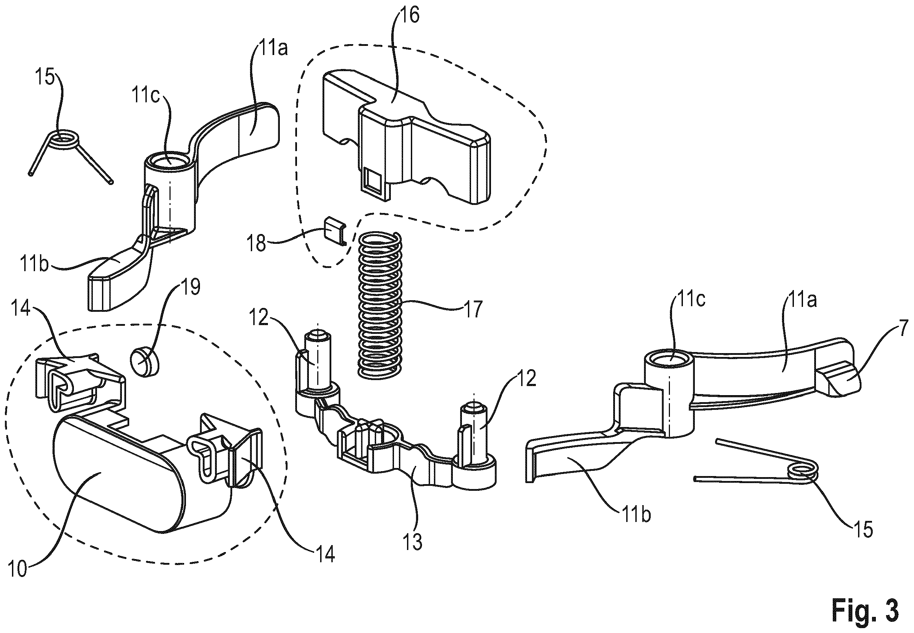

The function of the pushbutton 10 is explained by reference to figures 3 to 5.

In figure 3 the mechanism to retract the locking pins 7 with the pushbutton 10 is shown in exploded state: The locking pins 7 are positioned at a first end of a locking lever 11. This locking lever has two arms 11a and 11b, that are joined at a bushing 11c. With this bushing 11c the locking lever 11 is positioned on a bolt 12 that is part of a holder 13.

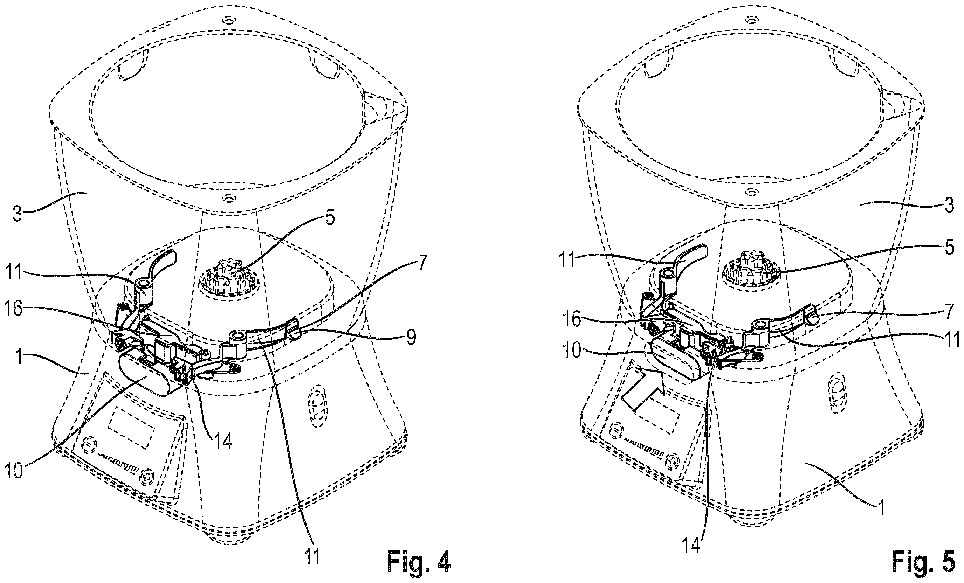

The pushbutton 10 is provided with chamfers 14 at its side. When the pushbutton 10 is pushed in as is shown in fig. 5 it moves with these chamfers 14 the second ends of the locking levers 11 in an outwardly direction so that the locking levers 11 are swivelled around the bolts 12 and so the locking pins 7 at the other end of the locking levers are moved in an inwardly direction and thus retracted.

The swivelling of the locking levers 11 works against torsion springs 15.

The pushbutton 10 cooperates as well with an appliance indicator 16 that as well can be seen in figure 1.

When an appliance 3 is positioned with its connecting region 4 onto the connection section 2 of the motor block 1 the appliance indicator 16 is pushed down against a compression spring 17. The appliance indicator 16 is hold down by the mounted appliance 3.

The appliance indicator 16 is positioned substantially above the pushbutton 10 and is provided with a metal part 18 at its front side that is directed towards said pushbutton 10.

The pushbutton 10 is provided on its backside with a magnet 19.

When an appliance 3 is situated onto the motor block 1 so that the appliance indicator 16 is pushed down the magnet 19 at the pushbutton 10 will be attracted by the metal part 18 at the appliance indicator 16 when the pushbutton 10 is pushed in. So the pushbutton 10 is kept in its pushed in position and at the same time the locking pins 7 are kept in their retracted position.

Now the appliance 3 can be lifted from the motor block 1 as this movement is not locked anymore by the locking pins 7 engaging with the locking slots 8.

When the appliance 3 is lifted from the motor block 1 the appliance indicator 16 is released and can move upwards. This movement is effected by the compression spring 17.

With the upward movement of the appliance indicator 16 the metal part 18 is moved away from the magnet 19 so that the magnet 19 is not attracted to said metal part 18 anymore and thus the pushbutton 10 moves back into its original, non-pushed in position shown in figure 4.

This as well releases the swivel levers 11 from the position in that the locking pins 7 are in retracted position.

Accordingly, setting an appliance 3 onto the motor block 1 will again result in pushing in the locking pins 7 until they lock the appliance in its working condition. At the same time the appliance indicator 16 is pushed down and thus prepares to keep the pushbutton 10 in when it is pushed. Again the pushbutton 10 is released by lifting the appliance 3 off the motor block 1.

The invention has the general advantage that it will work properly when an appliance 3 is mounted on the motor block 1 and it is an easy handling to remove the appliance 3 again simply by pressing the pushbutton 10 which then releases the mechanism for as long as the attachment appliance 3 is still present on the motor block 1. This gives the user the possibility to lift the appliance 3 with both hands what facilitates the handling of the appliance 3.

The whole mechanism leaves smooth surfaces especially on the outer side of the connection section 2 and of the connection region 4 that thus six .are easy to clean

The features disclosed in the description above, in the appending claims and/or in the drawings can be used alone or in any combination to realise the invention in its different embodiments.

### LIST OF REFERENCE NUMBERS

- 1: motor block
- 2: connection section
- 3: appliance
- 4: connection region
- 5: shaft end
- 6: connector
- 7: locking pins
- 8: locking slots
- 9: front edges
- 10: pushbutton
- 11: swivel lever
- 11a: lever arm
- 11b: lever arm
- 11c: bushing
- 12: bolt
- 13: holder
- 14: chamfer
- 15: torsion spring
- 16: appliance indicator
- 17: compression spring
- 18: metal part
- 19: magnet

## Claims

1. Food processor with the motor block (1) and an appliance(3) being separable from the motor block (1) for what the motor block (1) as the connection section(2) and the appliance (4) as the connection region (4) corresponding with the connection section (2) and with locking pins (7) cooperating with locking slots (8) being situated at the connection section (2) or the connection region (4), respectively, **characterised in that**
the locking pins (7) are retractable from said locking slots (8).

2. Food processor according to claim 1,
**characterised in that**
the locking pins (7) are spring-loaded to engage with the locking slots (8).

3. Food processor according to claim 1 or 2,
**characterised in that**
the locking pins (7) are provided with wedge like front edges (9) to be pushed back during the connecting procedure of motor block (1) and appliance (3).

4. Food processor according to one or more of the claims above,
**characterised in that**
the locking pins (7) are retractable by a pushbutton (10).

5. Food processor according to one or more of the claims above,
**characterised in that**
the pushbutton (10) cooperates with an appliance indicator (16) to be releasable after the appliance indicator (16) indicates the removal of the appliance using a magnet (19) and a cooperating metal part (18) provided at the pushbutton (10) and the appliance indicator (16), respectively .

6. Food processor according to one or more of the claims above,
**characterised in that**
the locking pins (7) are situated at the end of locking levers (11) that cooperate with the pushbutton (10).

7. Food processor according to one or more of the claims above,
**characterised in that**
the connection section (2) and the connection region (4) are rotational symmetric.
